# EUROPÄISCHE PATENTSCHRIFT

(11) **EP 4 150 654 B1**
(45) Veröffentlichungstag und Bekanntmachung des Hinweises auf die Patenterteilung: **06.12.2023**
(21) Anmeldenummer: 21721043.4
(22) Anmeldetag: 21.04.2021
(51) Int. Cl.: H01H 9/00, H01H 39/00, H01H 9/16

(54) **ELEKTRISCHE TRENNVORRICHTUNG, SYSTEM MIT EINER TRENNVORRICHTUNG SOWIE VERFAHREN ZUR HERSTELLUNG EINER TRENNVORRICHTUNG**
ELECTRICAL DISCONNECTING DEVICE, SYSTEM COMPRISING A DISCONNECTING DEVICE, AND METHOD FOR PRODUCING A DISCONNECTING DEVICE
DISPOSITIF DE DÉCONNEXION ÉLECTRIQUE, SYSTÈME COMPRENANT UN DISPOSITIF DE DÉCONNEXION ET PROCÉDÉ DE PRODUCTION D'UN DISPOSITIF DE DÉCONNEXION

(30) Priorität: 13.05.2020 DE 102020112918
(43) Veröffentlichungstag der Anmeldung: 22.03.2023
(73) Patentinhaber: Auto-Kabel Management GmbH, 79688 Hausen i.W. (DE)
(72) Erfinder: BETSCHER, Simon, 41515 Grevenbroich (DE); MOSZYNSKI, Markus, 41812 Erkelenz (DE); DOHRMANN, Philipp, 41199 Mönchengladbach (DE)
(74) Vertreter: Cohausz & Florack
(86) Internationale Anmeldenummer: PCT/EP2021/060305
(87) Internationale Veröffentlichungsnummer: WO 2021/228518

(56) Entgegenhaltungen:
- DE-A1-102010 045 726
- FR-A1- 3 014 594

## Beschreibung

Der Gegenstand betrifft eine elektrisch Trennvorrichtung, insbesondere für ein 48 V-Bordnetz, ein System mit einer solchen elektrischen Trennvorrichtung, insbesondere als Teil eines 48 V-Bordnetzes, als auch ein Verfahren zur Herstellung einer Trennvorrichtung.

Trennvorrichtungen, insbesondere pyrotechnische Trennvorrichtungen, zum Durchtrennen einer Batterieleitung, insbesondere unter Last, sind hinlänglich bekannt. Bei den bekannten Lösungen werden Trennmeißel oder Trennbolzen durch einen Antrieb, insbesondere einen pyrotechnischen Antrieb auf eine Trennstelle zu beschleunigt. Durch ihre Bewegungsenergie trennen Trennmeißel oder Trennbolzen die Trennstelle mechanisch auf.

Für ein Trennen unter Last wird beispielsweise bereits vorgeschlagen, dass die Trennstelle von einem flüssigen Medium umflossen ist, wie dies beispielsweise in der deutschen Patentanmeldung DE 10 2010 035 648 beschrieben ist.

Die bisher bekannten Trennvorrichtungen für 48 V-Bordnetze haben jedoch den Nachteil, dass sie stets für den Anschluss an eine Airbagsteuerleitung gebildet sind. Hierzu sind die Steckermimiken von pyrotechnischen Airbagansteuerungen zu verwenden, welche hinsichtlich ihrer Funktionalität stark begrenzt sind, insbesondere lediglich ein 2-poligen Anschluss ermöglichen, mit dem die Zündpille gezündet werden kann.

Im Crashfall oder in einem sonstigen Schadenfall ist es jedoch nicht nur notwendig, die Energieleitung aufzutrennen, sondern es kann auch notwendig sein, ein Signalpfad gleichzeitig aufzutrennen. Darüber hinaus kann der Wunsch bestehen, das ohnehin an dem Trennelement anliegende Batteriepotential, insbesondere das B+ Potential, abzugreifen, insbesondere für einen Anschluss an einen Batteriesensor.

Dem Gegenstand lag daher die Aufgabe zugrunde, eine elektrische Trennvorrichtung zur Verfügung zu stellen, welche bei Bereitstellung von erweiterten Funktionalitäten leicht herstellbar ist.

Diese Aufgabe wird durch eine elektrische Trennvorrichtung nach Anspruch 1, ein System nach Anspruch 12 sowie ein Verfahren nach Anspruch 13 gelöst.

Zunächst einmal ist die elektrisch Trennvorrichtung hinsichtlich ihrer Trennung des Energieleiters im Wesentlichen herkömmlich geformt.

Hierzu hat die Trennvorrichtung ein Gehäuse. Das Gehäuse nimmt eine erste als auch eine zweite Anschlusslasche auf. Die Anschlusslaschen können aus dem Gehäuse herausgeführt sein und als Anschlussfahnen, Flachleitungen, Kontaktpins, Crimpkontakte, Anschlussbolzen der dergleichen zum Verbinden mit elektrischen Leitungen gebildet sein.

Die Anschlusslaschen können außerhalb des Gehäuses bimetallisch beschichtet sein, einen Anschlussbolzen aufweisen, eine Bohrung aufweisen oder dergleichen geformt sein, um stoffschlüssig, mittels Schweißen oder Löten, formschlüssig und/oder kraftschlüssig, beispielsweise mittels Verschrauben, Crimpen oder dergleichen mit einem elektrischen Leiter kontaktiert zu werden.

Die Anschlusslaschen können aus einem metallischen Material, vorzugsweise Kupfer oder Kupferlegierungen als auch Aluminium oder Aluminiumlegierungen gebildet sein. Innerhalb des Gehäuses sind die Anschlusslaschen in einem geschlossenen Zustand der Trennvorrichtung elektrisch leitend miteinander verbunden und bilden im geschlossenen Zustand einen Strompfad. Dieser Strompfad ist zwischen der ersten und zweiten Anschlusslasche gebildet, so dass ein Strom von der ersten Anschlusslasche über den Strompfad zu der zweiten Anschlusslasche fließen kann.

Entlang des Strompfads ist im Inneren des Gehäuses eine räumlich zwischen den Anschlusslaschen liegende Trennstelle vorgesehen. Die Trennstelle kann eine Verjüngung, Sollbruchstelle oder dergleichen an der Verbindung zwischen den Anschlusslaschen sein. Die Trennstelle kann eine Kerbung sein, welche die Anschlusslaschen verjüngt. Die Trennstelle kann auch mittels eines Lots zwischen den Anschlusslaschen gebildet sein, die ohne das Lot voneinander beabstandet sind. Die Trennstelle bildet im getrennten Zustand einen Spalt zwischen den Anschlusslaschen aus. Dieser Spalt verhindert dann einen Stromfluss zwischen den Anschlusslaschen.

An den Anschlusslaschen können Sollbiegelinien vorgegeben sein, beispielsweise durch maschinelle Vorprägungen oder dergleichen. Dadurch wird eine vorgegebene Biegelinie der Anschlusslaschen im Falle des Trennens ermöglicht.

Um die Anschlusslaschen voneinander zu trennen, d.h. die Trennvorrichtung unter Last auftrennen zu können, wird ein ein Trennen der Trennstelle beeinflussender Antrieb vorgeschlagen. Dieser Antrieb übt eine Kraft auf ein Trennelement und/oder die Trennstelle auf, um die Trennstelle zu öffnen und so die Anschlusslaschen voneinander zu trennen. Der Antrieb ist gegenständlich in einem in dem Gehäuse gebildeten Kanal angeordnet.

Das Gehäuse hat einen sogenannten Schusskanal, der auf der einen Seite durch die Trennstelle und die Anschlusslaschen und auf der anderen Seite durch den Antrieb begrenzt ist. Zumindest zwischen dem Antrieb und der Trennstelle ist der Kanal gebildet.

Zwischen Antrieb und Trennstelle kann im Kanal noch ein Trennelement vorgesehen sein, welches durch den Antrieb in Richtung der Trennstelle beschleunigt werden kann.

Das Trennelement kann als Bolzen oder Trennmeißel gebildet sein. Auch ist es möglich, dass der Antrieb unmittelbar auf die Trennstelle wirkt.

In dem Kanal kann ein im Wesentlichen inkompressibles Medium, insbesondere ein pastöses oder flüssiges Medium oder ein kompressibles Medium wie ein Edelgas oder ein lichtbogen-löschendes Gas, wie beispielsweise SF6 vorgesehen sein.

Auf der dem Kanal abgewandten Seite der Trennstelle kann das Gehäuse ein Aufnahmevolumen für die auseinander gebogenen Anschlusslaschen aufweisen. Wenn der Antrieb auf die Anschlusslaschen wirkt, werden diese vom Antrieb weg in dieses Aufnahmevolumen gedrückt. In dem Aufnahmevolumen kann dasselbe Medium sein, wie in dem Kanal.

Durch das Medium wird ein sich in dem Spalt bildender Lichtbogen unmittelbar gelöscht. Wird die Trennstelle unter Last geöffnet, so bildet sich an der Trennstelle über den gebildeten Spalt ein Lichtbogen, der durch das Medium nach der Trennung gelöscht wird.

Zum Anschluss des Antriebs, insbesondere zur elektrischen Zündung oder Aktivierung des Antriebs, ist ein auf der dem Kanal abgewandten Seite des Antriebs angeordnetes Verbindungselement vorgesehen, welches zumindest zwei Anschlüsse des Antriebs aufnimmt.

Das Verbindungselement ist gegenständlich nunmehr nicht nur zur Aufnahme der Anschlüsse des Antriebs gebildet, sondern auch zur Aufnahme von zwei Kontaktelementen eines Schaltpfads. Ein Schaltpfad ist entlang der Trennvorrichtung zusätzlich zu dem Pfad zwischen den Anschlusslaschen gebildet, um im Falle der Auslösung der Trennvorrichtung geöffnet zu werden. Die Kontaktelemente des Schaltpfads werden ausgehend von dem Verbindungselement über Verbindungsstege jeweils in den Kanal geführt. Das heißt, dass ausgehend von dem Verbindungselement die Kontaktelemente über Stege in den Kanal hinein geführt sind.

Das Verbindungselement kann im Wesentlichen rohrförmig sein. An der Innenseite des Rohres, im durch das Rohr aufgespannten Volumen, welches bevorzugt zylindrisch ist, kann der Antrieb angeordnet sein. Der Antrieb kann dort formschlüssig verrasten und beispielsweise mittels eines O-Rings abgedichtet sein, so dass im Falle eines Auslösens eines pyrotechnischen Antriebs ein Druckverlust über das Verbindungselement vermieden oder verringert wird und der durch den Antrieb erzeugte Gasdruck auf die Trennstelle wirken kann.

Entlang der äußeren Mantelfläche des Verbindungselements können die Verbindungsstege angeordnet sein. Die Kontaktelemente sind bevorzugt innerhalb des von dem Verbindungselement umschriebenen Volumens, werden von dort durch die Wand des Verbindungselements geführt sind und gehen an der äußeren Mantelfläche des Verbindungselements in die Verbindungsstege über. Von der äußeren Mantelfläche des Verbindungselements ausgehend werden die Verbindungsstege in den Kanal geführt. Innerhalb des Kanals sind die Verbindungsstege an einer Verbindungsstelle miteinander kurz geschlossen. Die Verbindungsstelle kann in der Art einer Strombrücke gebildet sein.

Beim Auslösen des Antriebs wird nicht nur die Trennstelle geöffnet, sondern dadurch, dass die Verbindungsstelle innerhalb des Kanals liegt, außerdem die Verbindungsstelle geöffnet. Beim Auslösen des Antriebs werden die Verbindungsstege mechanisch aufgetrennt. Durch den Antrieb wird die Verbindungsstelle von dem Kontaktelement weg bewegt, so dass die Verbindungsstege mechanisch aufgetrennt werden und somit eine Trennung der Verbindung zwischen den beiden Kontaktelementen innerhalb des Verbindungselements bewirkt wird.

Somit wird gegenständlich beim Auslösen des Antriebs einerseits die Trennstelle mechanisch geöffnet und andererseits der durch die Verbindungsstelle gebildete Kurzschluss zwischen den Kontaktelementen aufgebrochen.

Gemäß einem Ausführungsbeispiel wird vorgeschlagen, dass neben den Kontaktelementen das Verbindungselement darüber hinaus einen Batteriekontakt aufnimmt. Somit ist innerhalb des Verbindungselementes, insbesondere innerhalb des von dem Verbindungselement umschlossenen Volumens, neben den Anschlüssen des Antriebs und den beiden Kontaktelementen zusätzlich zumindest ein Batteriekontakt vorgesehen. Der Batteriekontakt ist gegenständlich über einen Verbindungssteg mit einer der Anschlusslaschen kurzgeschlossen. Bevorzugt durchbricht der Batteriekontakt die Wand des Verbindungselements und wird durch einen Verbindungssteg, der außen am Verbindungselement entlangläuft, zu der Anschlusslasche geführt. Der Verbindungssteg des Batteriekontakts kann entsprechend der Verbindungsstege der Kontaktelemente gebildet und entlang des Verbindungselements geführt sein. Der Verbindungssteg des Batteriekontakts kann s-förmig oder bogenförmig in Richtung des Batteriekontakts verlaufen. Hierdurch kann der Verbindungssteg sich elastisch verformen und so einen Toleranzausgleich schaffen.

Es ist erkannt worden, dass an den Anschlusslaschen in der Regel "sauberes" Batterie B+ Potential anliegt. Die elektrische Trennvorrichtung ist im Kraftfahrzeug in der Regel in unmittelbarer Nähe zu dem Batteriepol vorgesehen, um die Batterie im Crashfall vom Bordnetz trennen zu können. Da die Anschlusslaschen somit direkt mit dem Batteriepol verbunden sind, liegt das Batteriepotential unverfälscht an den Anschlusslaschen an. Um nun mittels eines Batteriesensors den Batteriezustand messen, zu können, muss das Batteriepotential möglichst fehlerfrei gemessen werden können. Dies kann über den gegenständlichen Batteriekontakt erfolgen, der innerhalb des Verbindungselements kontaktiert werden kann und über den das Batteriepotential abgreifbar ist.

Der Batteriekontakt ist mit einer der Anschlusslaschen kurzgeschlossen, an der im eingebauten Zustand in der Regel das B+ Potential oder das B- Potential der Batterie anliegt. Ein gegenständliches Trennelement ist in der Regel high-side der Batterie angeschlossen, so dass an den Anschlusslaschen das B+ Potential anliegt. Es ist jedoch auch möglich, dass das Trennelement zusätzlich oder alternativ am low-side Potential der Batterie angeschlossen ist und dort das B- Potential abgreifbar ist. Der mit dem Batteriekontakt verbundene Batteriesensor kann unverfälscht das Batteriepotential abgreifen, da zwischen der Anschlusslasche und dem Batteriepol im eingebauten Zustand in der Regel kein weiteres Bauelement angeordnet ist, welches die Messung des Batteriepotentials verfälschen könnte. Lediglich ein kurzes Verbindungskabel, wenn überhaupt, liegt zwischen der Anschlusslasche und dem Batteriepol.

Gemäß einem Ausführungsbeispiel ist das Verbindungselement als Steckkontakt, insbesondere als Stecker oder Buchse gebildet. Das Verbindungselement ist dabei bevorzugt mit einem inneren Bereich und einem äußeren Bereich gebildet. Eine äußere Mantelfläche des Verbindungselements umschließt das Volumen des inneren Bereichs des Verbindungselements. Sowohl die Verbindung zwischen den Verbindungsstegen und den Kontaktelementen, als auch zwischen dem Verbindungssteg und dem Batteriekontakt, können durch diese äußere Mantelfläche hindurch geführt sein. Somit kann vom Inneren des Verbindungselements zum Äußeren des Verbindungselements hin eine Verbindung gebildet sein.

An der äußeren Mantelfläche entlang verlaufen die Verbindungsstege. Zwei Verbindungsstege laufen vorzugsweise parallel zur Längsrichtung des Verbindungselements hin zu der Verbindungsstelle und ein dritter Verbindungssteg läuft parallel zur Längserstreckung des Verbindungselements hin zu einer Kontaktstelle mit einer Anschlusslasche.

Gemäß einem Ausführungsbeispiel wird vorgeschlagen, dass das Gehäuse mehrteilig ist. Dabei können zumindest die Anschlusslaschen und die Trennstelle in einem ersten Gehäuseteil sein. Innerhalb dieses ersten Gehäuseteils kann der Kanal zumindest teilweise gebildet sein. In Längserstreckung des Kanals kann das Verbindungselement angeordnet sein und ein zweites Gehäuseteil bilden. Das Verbindungselement kann den Kanal abschließen. Das Verbindungselement kann auch den Kanal zunächst in seinem von seiner Mantelfläche umschlossenen Volumen weiterführen. Im Inneren des Verbindungselements kann der Antrieb zumindest in Teilen angeordnet sein.

Um im Falle einer Auslösung des Antriebs zu verhindern, dass aufgebauter Druck durch das Verbindungselement entweichen kann, ist das Verbindungselement im oder an dem Kanal, den Kanal radial abdichtend angeordnet.

Gemäß einem Ausführungsbeispiel wird vorgeschlagen, dass das Verbindungselement eine sich in Längsrichtung erstreckende Durchgangsöffnung aufweist, dass in der Durchgangsöffnung die Durchgangsöffnung radial abdichtend der Antrieb angeordnet ist. Das Verbindungselement kann in Längserstreckung des Kanals in dem Kanal aufgenommen werden. In das Verbindungselement erstreckt sich die Durchgangsöffnung, die zum Teil des Kanals wird. Den Kanal abschließend kann der Antrieb innerhalb der Durchgangsöffnung des Verbindungselements angeordnet sein. Die Durchgangsöffnung kann zur Aufnahme der zwei Anschlüsse des Antriebs gebildet sein. Somit kann der Antrieb mit seinen beiden Anschlüssen voraus in die Durchgangsöffnung eingeschoben werden.

Innerhalb der Durchgangsöffnung kann eine durchbrochene Wand vorgesehen sein, innerhalb welcher Öffnungen vorgesehen sind, die die Anschlüsse des Antriebs aufnehmen. Im eingesteckten Zustand erstrecken sich dann die Anschlüsse des Antriebs durch die Wand hindurch in die dem Kanal abgewandte Seite des Verbindungselements und bilden Kontaktpins des Steckkontakts des Verbindungselements.

Gemäß einem Ausführungsbeispiel wird vorgeschlagen, dass in dem Kanal ein fließfähiges Medium, insbesondere ein gelförmiges Medium zwischen dem Antrieb und der Trennstelle angeordnet ist und dass das Medium unmittelbar nach der Trennung der Trennstelle diese umfließt. Wie eingangs bereits erläutert, hat das Medium bevorzugt Lichtbogen löschende Eigenschaften, so dass bei einer Trennung der Trennstelle unter Last das Medium den entstehenden Lichtbogen unmittelbar löscht.

Gemäß einem Ausführungsbeispiel wird vorgeschlagen, dass die Anschlüsse, die Kontaktelemente und/oder der Batteriekontakt als Kontaktpins innerhalb des Verbindungselements, bevorzugt innerhalb des Steckkontakts des Verbindungselements angeordnet sind. Somit dient das Verbindungselement als einheitliche Anschlussmimik für den elektrischen Anschluss einerseits des Antriebs, andererseits eines Batteriesensors und drittens eines auftrennbaren Signal- oder Messpfads.

Zur Trennung der Verbindungsstelle von den Verbindungsstegen muss die Verbindungsstelle beim Auslösen des Antriebs mechanisch von den Kontaktelementen weg bewegt werden, insbesondere durch eine transversale Bewegung. Um diese Bewegung zu initiieren, muss eine Kraft auf die Verbindungsstelle ausgeübt werden, die von den Kontaktelementen weg gerichtet ist. Hierzu wird vorgeschlagen, dass die Verbindungsstelle an dem Antrieb angelenkt ist.

Der Antrieb kann aus einer Antriebseinheit und einem Bolzen gebildet sein. Der Antrieb kann insbesondere ein pyrotechnischer Antrieb sein. In diesem Fall kann die Antriebseinheit eine pyrotechnische Zündpille aufweisen. Ausgangsseitig der pyrotechnischen Zündpille, in Richtung des Kanals gerichtet, auf der den Anschlüssen des Antriebs abgewandten Seite, kann ein Bolzen an der pyrotechnischen Zündpille angeordnet sein. Der Bolzen kann auch in der Form einer Hülse die Zündpille an ihrer äußeren Mantelfläche umschließen und so in einem Längsschnitt u-förmig an der Zündpille anliegen. Der Bolzen kann seinerseits an seiner äußeren Mantelfläche gegenüber der inneren Mantelfläche des Kanals abgedichtet sein. Hierzu kann ein umlaufende Dichtung, insbesondere ein Dichtring vorgesehen sein. Beim Auslösen der Zündpille, insbesondere wenn ein elektrischer Impuls an die Anschlüsse angelegt wird, explodiert die Zündpille und schlagartig bildet sich ein Explosionsgas. Dieses Explosionsgas baut einen Druck auf, der dazu führt, dass der Bolzen in Richtung der Trennstelle beschleunigt wird.

Wenn nun die Verbindungsstege an dem Verbindungselement fest angeordnet sind und die Verbindungsstelle an dem Bolzen angelenkt ist, erfolgt durch eine relative Bewegung des Bolzens zu dem Verbindungselement eine Bewegung der Verbindungsstelle weg von dem Verbindungssteg. Diese Kraft kann ausreichen, um die Verbindungsstege aufzutrennen.

Zur mechanischen Anlenkung der Verbindungsstelle an dem Antrieb wird vorgeschlagen, dass die Verbindungsstelle formschlüssig an dem Bolzen angeordnet, insbesondere befestigt ist. Auch kann die Verbindungsstelle an der der Trennstelle zugewandten Stirnfläche des Bolzen angeordnet sein. Die Verbindungsstelle kann radial nach innen in die Stirnfläche ragen.

Eine besonders einfache Konstruktion ist dadurch gebildet, dass der Bolzen einen radialen Rücksprung aufweist. Dies kann in Form einer Nut sein. Die Nut kann sekantenförmig sein oder teilweise als auch vollständig umlaufend an dem Bolzen angeordnet sein. Der Bolzen kann in einem Längsschnitt T-förmig sein. Die Nut kann insbesondere nur in einem Winkelabschnitt vorgesehen sein, in dem die Verbindungsstelle angeordnet ist. Der die Nut bildendet, axial in Richtung der Trennstelle weisende Bereich des Bolzens kann umlaufend einen gleichen Radius haben oder z.B. in einem Winkelabschnitt in dem die Verbindungsstelle nicht angeordnet ist, einen geringeren Radius haben als in dem Winkelabschnitt, in dem die Verbindungsstelle angeordnet ist. Ist die Verbindungsstelle in der Nut angeordnet, kann diese nach dem Abscheren von den Verbindungsstegen in der Nut "gefangen" sein. Dadurch wird verhindert, dass die abgescherte Verbindungsstelle in Kontakt mit den aufgetrennten Kontaktlaschen kommt.

In dem Verbindungselement kann der Antrieb angeordnet sein. Teile des Antriebs, insbesondere Teile des Bolzens können stirnseitig in Richtung des Kanals aus der Durchgangsöffnung des Verbindungselements weisen. In einem stirnseitigen Bereich des Bolzens kann der radiale Rücksprung zur Aufnahme der Verbindungsstelle angeordnet sein.

An dem Verbindungselement, insbesondere an der äußeren Mantelfläche des Verbindungselements, können die Verbindungsstege geführt sein. Die Verbindungsstege erstrecken sich bevorzugt über die Stirnfläche des Verbindungselements hinaus in Richtung des Kanals und können dann radial nach innen gebogen verlaufen. Die Verbindungsstege können sich aber auch außen entlang der Längsachse des Verbindungselements erstrecken und erst im Bereich der Stirnfläche des Verbindungselements, durch die Mantelfläche des Verbindungselements hindurch in Richtung des Kanals geführt sein, wobei die Verbindungsstege radial nach innen gebogen verlaufen. In beiden Fällen kommen die Verbindungsstege, respektive die zwischen den Verbindungsstegen gebildete Verbindungsstelle, in Eingriff mit der Nut oder liegen an der Stirnfläche des Bolzens an. Es wird daher vorgeschlagen, dass die Verbindungsstege winklig zu dem Rücksprung, insbesondere in Längsrichtung des Kanals, an dem Gehäuse, bevorzugt dem Verbindungselement angeordnet sind.

Wird der Bolzen relativ zur Verbindungsstelle durch den Antrieb beschleunigt, nimmt der Bolzen die hieran angeordnete Verbindungsstelle mit und reißt die Verbindungsstege auf. Dadurch wird eine Trennung zwischen den Kontaktelementen bewirkt. Ein so gebildeter Signal- oder Messpfad wird somit bei Auslösen des Antriebs aufgetrennt.

Eine besonders einfache Montage ist dadurch möglich, dass die Kontaktelemente und/oder der Batteriekontakt in einem gemeinsamen Stanzgitter gebildet sind. Dieses Stanzgitter kann bei der Montage in das Verbindungselement eingesetzt werden oder beim Spritzgießen des Verbindungselements in der Spritzgussform vorgesehen sein. Das Stanzgitter kann einerseits die Kontaktpins in dem durch das Verbindungselement umschlossenen Raum bilden und andererseits an der äußeren Mantelfläche des Verbindungselements entlang laufen.

Nach dem Montieren des Stanzgitters an dem Verbindungselement kann dieses aufgetrennt werden, so dass ein elektrischer Kontakt, der zunächst in dem Stanzgitter zwischen den Kontaktelementen untereinander und mit dem Batteriekontakt gebildet ist, aufgetrennt wird. Dies kann beispielsweise durch ein Auftrennen mittels eines Lasers oder ein Auffräsen erfolgen. Nach dem Auftrennen sind die Verbindungsstege die zunächst im Stanzgitter miteinander verbunden waren, voneinander getrennt.

Gemäß einem Ausführungsbeispiel wird vorgeschlagen, dass die Kontaktelemente mit den Verbindungsstegen einerseits und die Verbindungsstelle andererseits unabhängig voneinander in das Verbindungselement eingebaut sind. Wie zuvor erläutert, können die Kontaktelemente zusammen mit den Verbindungsstegen gemeinsam in einem Stanzgitter gebildet sein. Die Kontaktelemente und Verbindungsstege können auch als einzelne Drähte in dem Verbindungselement gebildet sein. Neben den Kontaktelementen und Verbindungsstegen einerseits wird ein zusätzlicher Draht oder ein zusätzliches Stanzgitter als Verbindungsstelle an/in dem Verbindungselement angeordnet. Nachdem sowohl die Kontaktelemente samt Verbindungsstegen als auch die Verbindungsstelle in oder an dem Verbindungselement befestigt wurden, können diese beiden Elemente elektrisch leitend miteinander verbunden werden, beispielsweise verlötet oder verklebt werden.

Gemäß einem Ausführungsbeispiel wird vorgeschlagen, dass die Kontaktelemente mit den Verbindungsstegen einerseits und die Verbindungsstelle andererseits als ein Bauteil in das Verbindungselement eingebaut sind. Wie zuvor erläutert, können die Kontaktelemente zusammen mit den Verbindungsstegen gemeinsam in einem Stanzgitter gebildet sein. Die Kontaktelemente und Verbindungsstege können auch als einzelne Drähte in dem Verbindungselement gebildet sein. Unmittelbar an den Verbindungsstegen, insbesondere einstückig kann die Verbindungsstelle angeordnet sein. Die Verbindungsstelle kann zunächst in dem Stanzgitter radial nach außen gebogen sein, so dass diese von dem Verbindungselement absteht. Nachdem der Antrieb montiert ist, kann die Verbindungsstelle in Richtung des Antriebs gebogen werden, so dass diese an dem Antrieb, wie beschrieben, anliegt.

Ein weitere Aspekt ist ein System mit einer Trennvorrichtung, wie sie zuvor beschrieben wurde und zumindest zwei Kraftfahrzeugbatteriekabeln, bei dem ein erstes Batteriekabel mit der ersten Anschlusslasche verbunden ist und ein zweites Batteriekabel mit der zweiten Anschlusslasche verbunden ist. Die Anschlusslaschen, die dem Batteriepol zugewandt ist, ist vorzugsweise diejenige, an der der Batteriekontakt befestigt ist. Der Batteriekontakt kann, nachdem das Verbindungselement an dem Kanal befestigt wurde, mittels Löten oder sonstiger Verfahren elektrisch leitend mit einer Anschlusslasche verbunden werden. Über den Batteriekontakt lässt sich ein elektrisches Potential der Batterie abgreifen und einem Batteriesensor zuführen.

Ein weiterer Aspekt ist ein Verfahren nach Anspruch 15. Bei diesem Verfahren wird zumindest ein Teil des Gehäuses aus einem Kunststoff gebildet, beispielsweise mittels Spritzgießen. In dem Gehäuse, insbesondere einem ersten Gehäuseteil sind Aufnahmen für die erste und zweite Anschlusslasche vorgesehen, wobei die Anschlusslaschen über eine Trennstelle miteinander verbunden sind. Die Anschlusslaschen werden in das Gehäuse eingesetzt. Neben einem ersten Gehäuseteil kann ein zweites Gehäuseteil als Verbindungselement gebildet sein. Dieses Verbindungselement kann zumindest teilweise rohrförmig sein. Das Verbindungselement hat eine in Längsrichtung durchgehenden Öffnung, die durch eine Mittelwand unterbrochen sein kann. Auf einer Seite der Mittelwand, dem ersten Gehäuseteil zugewandt, kann ein Antrieb eingesetzt werden.

Das Verbindungselement kann mit dieser Seite in das erste Gehäuseelement eingesetzt werden. Dadurch kann sich ein Kanal bilden, der ausgehend vom Antrieb in Richtung der Trennstelle gerichtet ist. Der Antrieb verschließt das Verbindungselement, insbesondere den Kanal, beispielsweise mittels einer Dichtung. Anschlüsse des Antriebs durchbrechen die Mittelwand und sind auf einer dem Kanal abgewandten Seite der Mittelwand angeordnet. Wie erläutert, kann in dem Verbindungselement eine Mittelwand eingezogen sein. In dieser Mittelwand können Durchgangsöffnungen vorgesehen sein, durch die die Anschlüsse des Antriebs gesteckt werden können.

Der Antrieb kann verrastend in dem Innenraum des Verbindungselements angeordnet sein. Auf der dem Antrieb abgewandten Seite der Mittelwand können in dem vom Verbindungselement umschriebenen Volumen zwei Kontaktelemente eines Mess- oder Schaltpfads vorgesehen sein. Diese Kontaktelemente werden über Verbindungsstege jeweils in den Kanal geführt und dort mit einer Verbindungsstelle miteinander kurzgeschlossen. Die Verbindungsstelle wird so in dem Kanal angeordnet, dass bei einem Auslösen des Antriebs die Verbindungsstelle von den Kontaktelementen wegbewegt wird, so dass die Verbindungsstege mechanisch aufgetrennt werden. Auf der dem Antrieb abgewandten Seite der Mittelwand kann in dem vom Verbindungselement umschriebenen Volumen ein Kontaktelement eines Batteriekontakts vorgesehen sein. Dieses Kontaktelement wird über Verbindungsstege zu einer der Anschlusslaschen geführt und dort mit der Anschlusslasche kurzgeschlossen.

Nachfolgend wird der Gegenstand anhand einer Ausführungsbeispiele zeigenden Zeichnung näher erläutert. In der Zeichnung zeigen:
- Fig. 1a: eine Explosionsdarstellung einer Trennvorrichtung gemäß einem Ausführungsbeispiel;
- Fig. 1b: eine Explosionsdarstellung einer Trennvorrichtung gemäß einem weiteren Ausführungsbeispiel;
- Fig. 2: eine Ansicht eines Steckkontakts an einem Verbindungselement gemäß einem Ausführungsbeispiel;
- Fig. 3: einen Längsschnitt durch eine Trennvorrichtung gemäß einem Ausführungsbeispiel;
- Fig. 4a-h: Verfahrensschritte zur Montage einer gegenständlichen Trennvorrichtung gemäß einem Ausführungsbeispiel;
- Fig. 5a, b: einen horizontalen Längsschnitt durch eine Trennvorrichtung gemäß einem Ausführungsbeispiel;
- Fig. 6: ein Stanzgitter gemäß einem Ausführungsbeispiel;
- Fig. 7: einen Längsschnitt durch eine Trennvorrichtung gemäß einem Ausführungsbeispiel;.

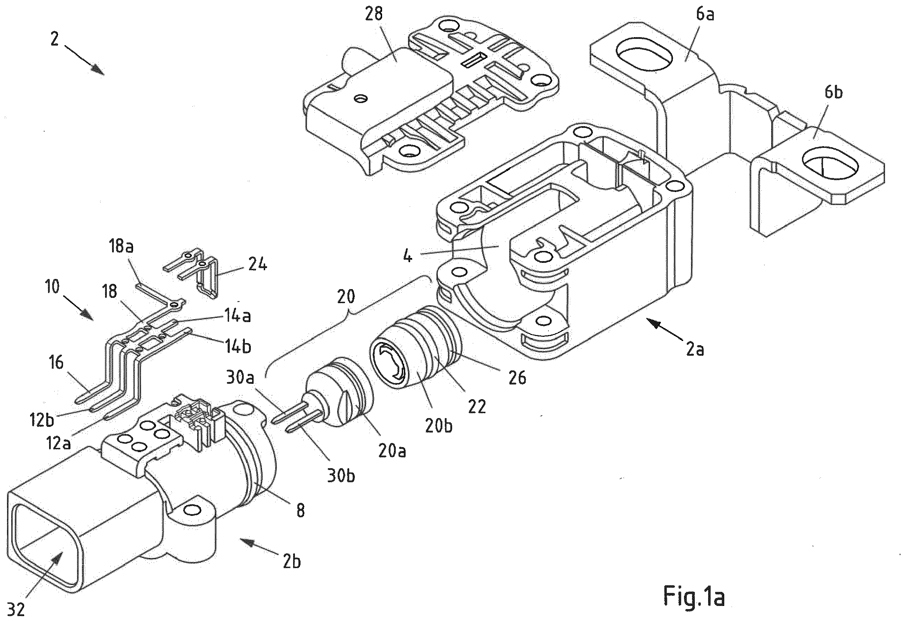

Fig. 1a zeigt eine Explosionsdarstellung einer Trennvorrichtung 2. Die Trennvorrichtung 2 umfasst ein erstes Gehäuseelement 2a sowie ein als zweites Gehäuseelement gebildetes Verbindungselement 2b. Wie nachfolgend noch gezeigt werden wird, werden die Gehäuseelemente 2a, b zusammengesteckt.

In dem ersten Gehäuseelement 2a kann ein Kanal 4 gebildet sein. Der Kanal 4 kann auf einer Seite durch Anschlusslaschen 6a, b begrenzt sein. Auf der anderen Seite des Kanals 4 kann das Verbindungselement 2b formschlüssig in das erste Gehäuseelement 2a eingesetzt werden und so den Kanal 4 verschließen.

Eine äußere Mantelfläche des Verbindungselements 2b ist kongruent zu einem Aufnahmevolumen am Kanal 4. Zum Verschluss des Kanals 4 kann an dem Verbindungselement 2b ein Dichtelement 8, beispielsweise ein O-Ring vorgesehen sein. In oder an dem Verbindungselement 2b kann ein Stanzgitter 10 vorgesehen sein. Das Stanzgitter 10 weist einerseits zwei Kontaktelemente 12a, b sowie zwei Verbindungsstege 14a, b auf.

Andererseits weist das Stanzgitter 10 einen Batteriekontakt 16 mit einem Verbindungssteg 18 auf. Die Verbindungsstege 14a, b, 18 sind in dem Stanzgitter noch miteinander verbunden, werden jedoch anschließend, wie noch gezeigt werden wird, aufgetrennt. Der Verbindungssteg 18 hat eine Anschlussfahne 18a zur Verbindung mit der Anschlusslasche 6a.

Das Verbindungselement 2b hat auf der dem Kanal 4 zugewandten Seite eine Öffnung, in die ein Antrieb 20 mit einer pyrotechnischen Antriebseinheit 20a und einen Bolzen 20b eingesetzt werden kann. Zur Abdichtung des inneren Volumens des Verbindungselements 2b gegenüber dem Kanal 4, kann ein weiteres Dichtelement 22, beispielsweise ein O-Ring vorgesehen sein.

Zum Verbinden der Kontaktelemente 12a, b miteinander ist eine Verbindungsstelle 24, beispielsweise als Kontaktbrücke, Drahtbrücke oder dergleichen, die ebenfalls als Stanzgitter gebildet sein kann, vorgesehen. Diese Verbindungsstelle 24 kann winklig geformt werden und mit einer Nut 26 des Bolzens 20b in Eingriff gebracht werden, wie nachfolgend noch gezeigt werden wird.

Zum Verschluss des Gehäuses ist ein Deckel 28 vorgesehen. Deckel 28, erstes Gehäuseelement 2a und das Verbindungselement 2b können jeweils ein gesondertes Spritzgussteil sein. Die Materialien der Spritzgussteile können unterschiedlich sein, so kann beispielsweise eine Schlagfestigkeit des Materials des ersten Gehäuseteils 2a größer sein, als des Verbindungselements 2b. Die Schlagfestigkeit des Deckels 28 kann bevorzugt entsprechend der Schlagfestigkeit des ersten Gehäuseelements 2a sein.

Die pyrotechnische Antriebseinheit 20a kann einerseits den Bolzen 20b aufnehmen und in Richtung des Kanals 4 im eingesetzten Zustand weisen. Auf einer dem Bolzen 20b abgewandten Seite hat die pyrotechnische Antriebseinheit 20a Anschlüsse 30a, b. Beim Einsetzen der pyrotechnischen Antriebseinheit 20a in eine Öffnung des Verbindungselements 2b können die Anschlüsse 30a, b durch eine Mittelwand durchgesteckt werden und in einer buchsenförmigen Aufnahme 32 des Verbindungselements 2b münden.

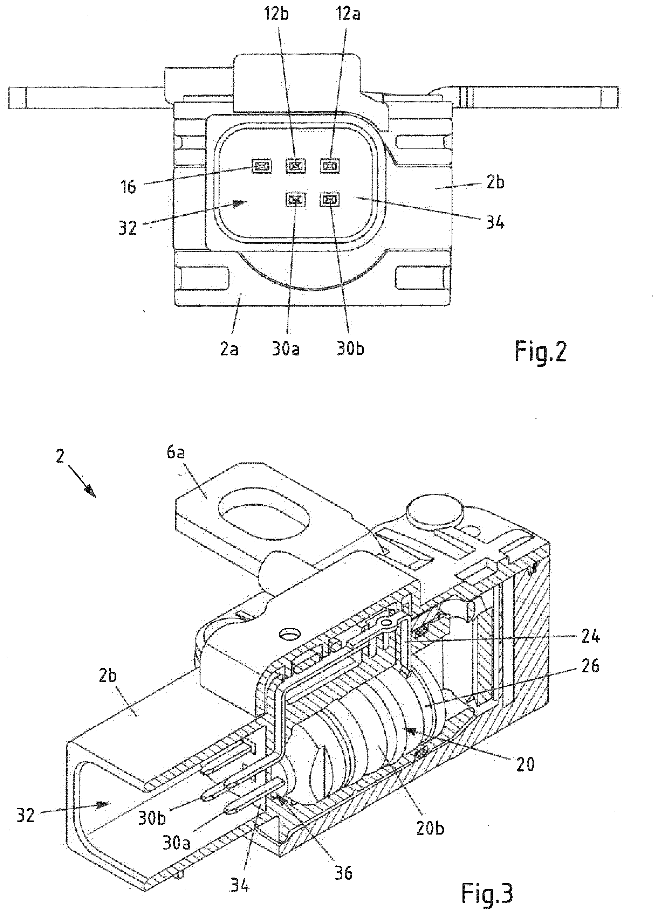

Die Kontaktelemente 12a, b als auch der Batteriekontakt 16 können durch die äußere Mantelfläche des Verbindungselements 2b geführt sein und ebenfalls in der buchsenförmigen Aufnahme 32 münden. Die buchsenförmige Aufnahme 32 des Verbindungselements 2b ist in einer Draufsicht in der Fig. 2 gezeigt.

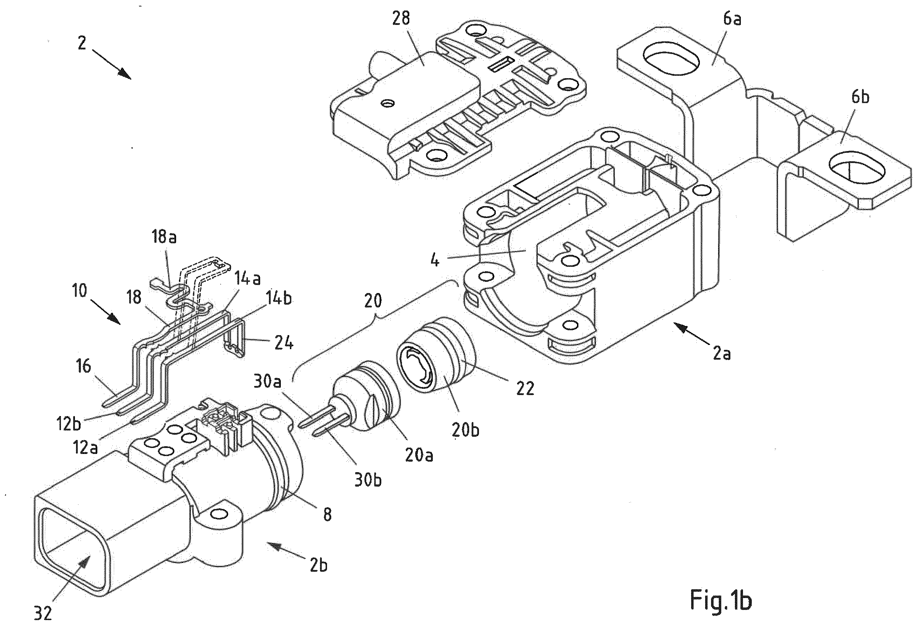

Fig. 1b zeigt eine alternative Ausführungsform. In oder an dem Verbindungselement 2b kann ein Stanzgitter 10 vorgesehen sein. Das Stanzgitter 10 weist einerseits zwei Kontaktelemente 12a, b sowie zwei Verbindungsstege 14a, b auf. Andererseits weist das Stanzgitter 10 einen Batteriekontakt 16 mit einem Verbindungssteg 18 auf. Die Verbindungsstege 14a, b, 18 sind in dem Stanzgitter noch miteinander verbunden, werden jedoch anschließend, wie noch gezeigt werden wird, aufgetrennt. Der Verbindungssteg 18 hat eine Anschlussfahne 18a zur Verbindung mit der Anschlusslasche 6a.

Im Unterschied zur Fig. 1a sind die Kontaktelemente 12a, b mit der Verbindungsstelle 24 einstückig gebildet. Diese Verbindungsstelle 24 kann zunächst, wie in der Fig. 1b durch die durchgezogenen Linien dargestellt, nach oben vom Verbindungselement 2b wegweisend gebogen sein. Nachdem der Antrieb 20 in das Verbindungselement 2b eingesetzt wurde, kann die Verbindungsstelle 24, wie gestrichelt gezeigt, nach unten gebogen werden, um mit dem Bolzen 20b in Kontakt zu kommen.

Im weiteren Unterschied zur Fig. 1a ist in Fig. 1b die Anschlussfahne wellenförmig, s-förmig oder in sonstiger Weise in Längsrichtung um zumindest zwei Radien gebogen geformt. Hierdurch kann ein Toleranzausgleich und eine Elastizität zwischen dem Verbindungssteg 18 einerseits und der Anschlusslasche 6a andererseits hergestellt werden.

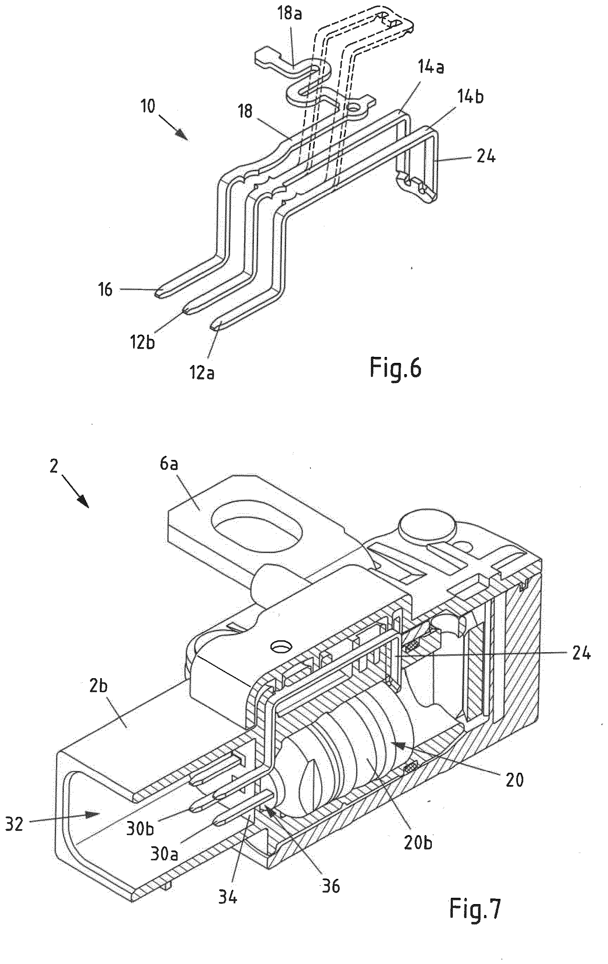

Das Stanzgitter 10 ist nochmals in der Fig. 6 dargestellt. Auch hier ist die Wellenform der Anschlussfahne 18a deutlich zu erkennen.

Der Antrieb 20 hat in Fig. 1b ebenfalls eine Antriebseinheit 20a. Der Bolzen 20b kann, wie auch in der Konfiguration nach Fig.1a hülsenförmig um die Antriebseinheit 20a herum, die Antriebseinheit 20a teilweise aufnehmend gestülpt sein. Im Gegensatz zu Fig. 1 kann der Bolzen 20b jedoch an seiner Stirnseite ohne eine Nut 26 gebildet sein. Zur Signaltrennung wird die Verbindungsstelle 24 im Einbauzustand unmittelbar an der Stirnfläche des Bolzens 20b angelegt.

In der Fig. 7 ist zu erkennen, dass die Verbindungsstelle 24 im Einbauzustand an der Stirnfläche des Bolzens 20 anliegt und nicht in einer Nut "gefangen" ist.

Die Fig. 2 zeigt das Verbindungselement 2b mit der buchsenförmigen Aufnahme 32. Dort ist zu erkennen, dass die Anschlüsse 30a, b die Kontaktelemente 12a, b sowie der Batteriekontakt 16 als Kontaktpins angeordnet sind. Die räumliche Anordnung zueinander ist dabei beliebig wählbar.

Ferner ist zu erkennen, dass die buchsenförmige Aufnahme 32 durch eine innenliegende Mittelwand 34 in der Durchgangsöffnung des Verbindungselements 2b verschlossen ist. Wenn hier von Durchgangsöffnung die Rede ist, so ist damit gemeint, dass sich durch das Verbindungselement 2b eine Öffnung erstreckt, welche durch die Mittelwand 34 unterbrochen ist. In der Mittelwand 34 sind Öffnungen für zumindest die Anschlüsse 30a, b und zusätzlich die Kontaktelemente 12a, b und/oder den Batteriekontakt 16, so dass die Mittelwand 34 durchbrochen ist. Aus diesem Grunde, da die Mittelwand 34 nicht vollständig geschlossen ist, ist das Dichtelement 22 vorgesehen, welches den Antrieb 2 abdichtet und ein Gasaustritt aus dem Kanal 4 in Richtung der buchsenförmigen Aufnahme 32 im Moment des Trennens verhindert.

Fig. 3 zeigt eine Trennvorrichtung 2 in einem Längsschnitt. In der Fig. 3 ist zu erkennen, dass das Verbindungselement 2b auf der einen Seite die buchsenförmige Aufnahme 32 und auf der anderen Seite eine Aufnahme 36 für den Antrieb 20 aufweist. Die Aufnahme 36 ist von der buchsenförmigen Aufnahme 32 durch die Mittelwand 34 getrennt. Durch die Wand 34 hindurchgeführt sind die Anschlüsse 30a, b.

Durch den Längsschnitt ist zu erkennen, dass das Verbindungselement 2b ein inneres Aufnahmevolumen aufweist, insbesondere im Bereich der buchsenförmigen Aufnahme 32. Dieses Volumen ist umschrieben durch eine äußere Mantelfläche des Verbindungselements 2b. Durch die äußere Mantelfläche hindurch verlaufend sind Teile des Stanzgitters 10, so dass die Drähte des Stanzgitters 10 einerseits in der buchsenförmigen Aufnahme 32 und andererseits in Längsrichtung des Verbindungselements 2b auf der äußeren Mantelfläche verlaufend angeordnet sind. In der längsseitigen Erstreckungsrichtung der Drähte des Stanzgitters 10 ist die Verbindungsstelle 24 vorgesehen. In der Fig. 3 ist zu erkennen, dass die Verbindungsstelle 24 stirnseitig das Verbindungselement 2b überragt und in Eingriff mit der Nut 26 des Bolzens 20b ist.

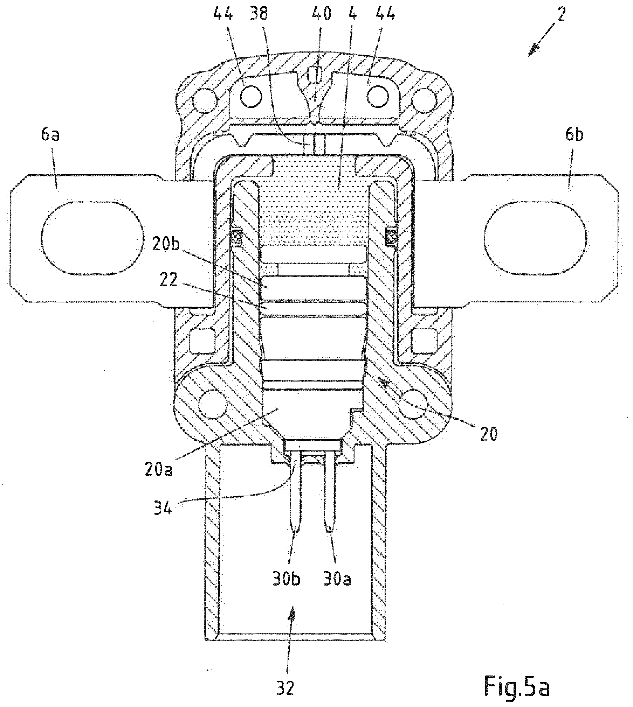

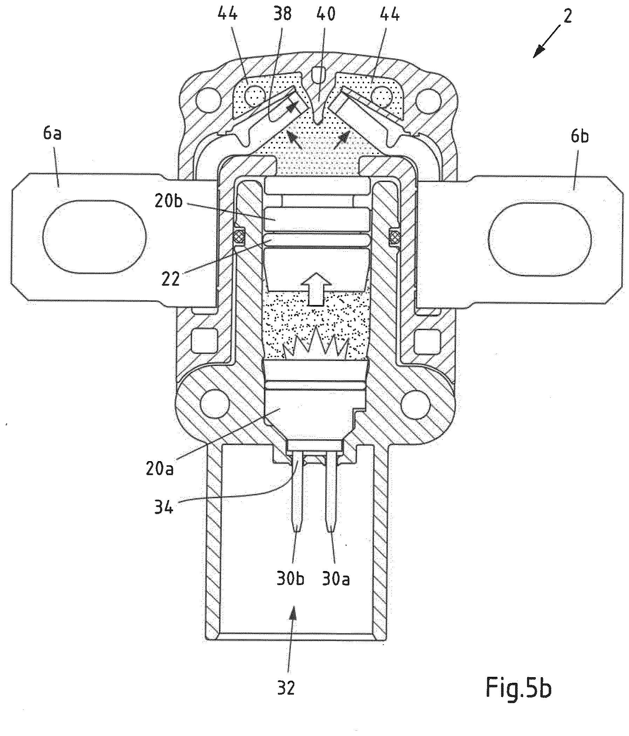

Fig. 5a, b zeigt einen horizontalen Längsschnitt durch eine Trennvorrichtung 2. Zu erkennen ist der Antrieb 20 mit der pyrotechnischen Antriebseinheit 20a und dem Bolzen 20b. Die pyrotechnische Antriebseinheit 20a und der Bolzen 20b sind auf der dem Kanal 4 zugewandten Seite der Mittelwand 34 des Aufnahmevolumens des Verbindungselements 2b angeordnet. Das Aufnahmevolumen ist durch das Dichtelement 22 gegenüber dem Kanal 4 verschlossen. Durch die Mittelwand 34 hindurch ragen die Anschlüsse 30a, b, die in der buchsenförmigen Aufnahme 32 als Anschlusspins gebildet sind.

In Längsrichtung des Kanals 4 auf der dem Bolzen 20b gegenüberliegenden Seite des Kanals 4 verlaufen die Anschlusslaschen 6a, b aufeinander zu und sind über eine Trennstelle 38 miteinander verbunden.

Fig. 5b zeigt die Trennvorrichtung 2 gemäß Fig. 5a im ausgelösten Zustand. Der Bolzen 20b wird durch ein elektrisches Zünden der pyrotechnischen Antriebseinheit 20a in Richtung der Trennstelle 38 beschleunigt und die Anschlusslaschen 6a, b werden an der Trennstelle 38 voneinander getrennt und auseinandergerissen. Die Anschlusslaschen 6a, b schwenken von dem Bolzen 20b weg in ein Aufnahmevolumen 44. Dabei ist ein Steg 40 in dem Aufnahmevolumen 44 vorgesehen, der in dem Bereich liegt, welcher den Spalt der Anschlusslaschen 6a, b im getrennten Zustand bildet. Durch diesen Steg 40 wird eine Lichtbogenlöschung bewirkt. Der Steg 40 kann an der Trennstelle 38 unmittelbar anliegen oder in Längsrichtung hiervon beabstandet.

Darüber hinaus ist in dem Kanal 4 ein flüssiges oder pastöses, insbesondere lichtbogenlöschendes Medium vorgesehen, um den Lichtbogen, der zwischen den Anschlusslaschen 6a, b gebildet wird, wenn dieser unter Last getrennt werden, unmittelbar bei der Trennung zu löschen.

In den nachfolgenden Figuren wird der Zusammenbau einer Trennvorrichtung 2 in den einzelnen Schritten beschrieben.

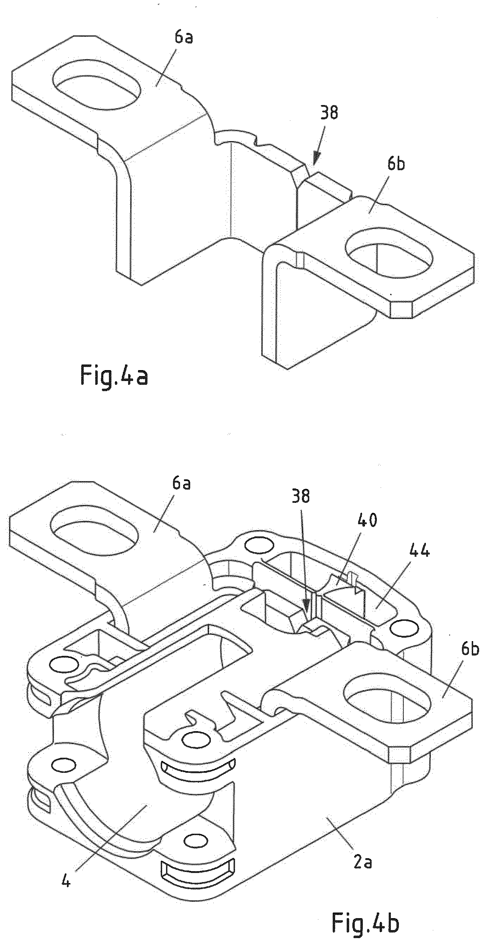

Fig. 4a zeigt die Montage der Anschlusslaschen 6a, b miteinander. Die Anschlusslaschen 6a, b können als Schmiedeteile oder als Stanzbiegefläche gebildet sind. Die Anschlusslaschen 6a, b haben sowohl im Querschnitt als auch im Längsschnitt ein L-förmiges Profil. Die Anschlusslaschen 6a, b können beispielsweise als gebogene Flachteile oder Bleche gebildet sein. Dabei können die Anschlusslaschen 6a, b mit Anschlussbolzen oder Durchgangsbohrungen (in Fig. 4a gezeigt) versehen sein. In einem Bereich, in dem die Anschlusslaschen 6a, b aus dem ersten Gehäuseelement 2a im zusammengebauten Zustand herausragen, können die Anschlusslaschen 6a, b in einer als horizontal zu bezeichnenden Ebene, bevorzugt parallel zueinander verlaufen. Insbesondere verlaufen die Anschlusslaschen 6a, b in einer gleichen Ebene. Anschließend werden die Anschlusslaschen 6a, b in einem Bereich, der bereits in dem ersten Gehäuseelement 2a liegt, in Richtung ihrer Flächennormalen gebogen und verlaufen dann parallel zueinander in einer als vertikal zu bezeichnenden Ebene.

Schließlich verläuft jeweils ein Schenkel der Anschlusslaschen 6a, b erneut parallel zu der Flächennormale der Schenkel, die in der vertikalen Ebene verlaufen und dort verlaufen die Schenkel der Anschlusslaschen 6a, b aufeinander zu und sind im Bereich der Trennstelle 38 miteinander verbunden. Dies kann über eine Lötverbindung, eine Schweißverbindung, eine Klebeverbindung oder dergleichen geschehen.

Neben den Anschlusslaschen 6a, b wird das erste Gehäuseteil 2a, wie in der Fig. 4b gezeigt, gebildet. Das erste Gehäuseteil 2a kann dabei als Spritzgussteil geformt werden. Das erste Gehäuseteil 2a kann einen Kanal 4 ausbilden, der sich von einer Stirnseite des ersten Gehäuseelements 2a in Richtung der Trennstelle 38 erstreckt. Das erste Gehäuseelement 2a kann Aufnahmen für die Anschlusslaschen 6a, b vorsehen, so dass die Anschlusslaschen 6a, b in verbundenen Zustand in diese Aufnahmen eingesteckt werden können. Auf der dem Kanal 4 abgewandten Seite der Anschlusslaschen 6a, b ist ein Aufnahmevolumen 44 in dem ersten Gehäuseelement 2a gebildet. Mittig des Aufnahmevolumens 44 weist der Steg 40 in Richtung der Trennstelle.

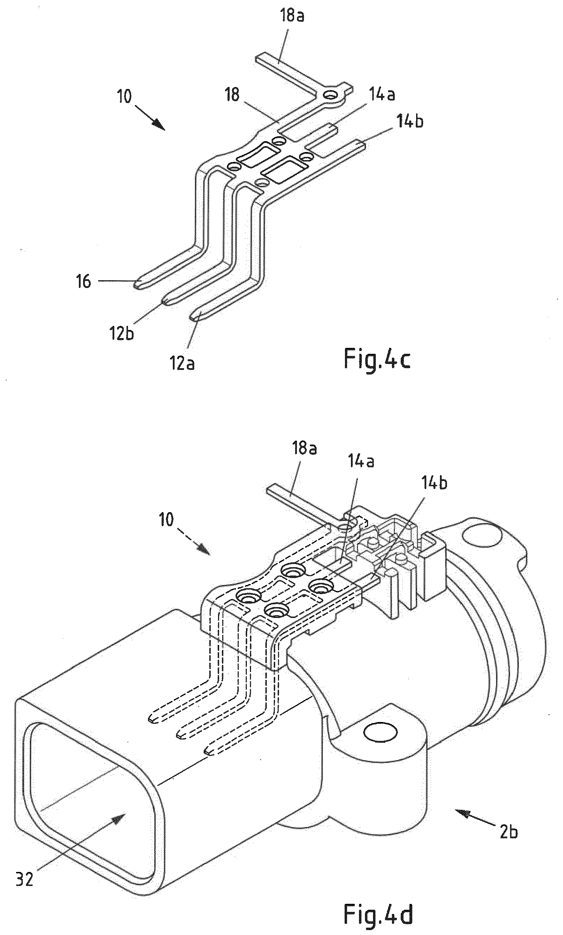

Das Stanzgitter 10 kann, wie in der Fig. 4c gezeigt, geformt werden. Das Stanzgitter 10 kann aus drei Schenkeln gebildet sein, wobei zwei Schenkel parallel zueinander verlaufen und ein mittiger Schenkel diese beiden parallelen Schenkel miteinander verbindet. Das Stanzgitter 10 hat an einem ersten Schenkel die Kontaktelemente 12a, b sowie den Batteriekontakt 16. Diese drei als Pins gebildeten Elemente werden über einen mittigen Schenkel, der senkrecht zu dem ersten Schenkel verläuft, mit einem weiteren Schenkel verbunden, der ebenfalls senkrecht zu dem mittigen Schenkel verläuft. An dem weiteren Schenkel sind die Verbindungsstege 14a, b sowie der Verbindungssteg 18 gebildet. An dem Verbindungssteg 18 ist eine Anschlussfahne 18a, die zum Anschluss an die Anschlusslasche 6a genutzt werden wird.

Die Stege 14a, b, 18 sind im Stanzgitter 10 noch elektrisch leitend miteinander verbunden, diese elektrisch leitfähige Verbindung wird jedoch im weiteren Verlauf der Montage aufgetrennt, so dass die Kontaktelemente 12a, b und der Batteriekontakt 16 elektrisch isoliert voneinander sind.

Das Stanzgitter 10 kann auch wie in Fig. 6 gezeigt geformt sein.

Fig. 4d zeigt das Verbindungselement 2b. Das Verbindungselement 2b hat die buchsenförmige Aufnahme 32. Zur Herstellung des Verbindungselements 2b kann das Stanzgitter 10 mit einem Kunststoff umspritzt werden, so dass sich die Form des Verbindungselements 2b bildet und das Stanzgitter 10 darin eingefasst ist. Zu erkennen ist, dass die Stege 14a, b, 18 an der äußeren Mantelfläche des Verbindungselements 2b, insbesondere entlang der Längsachse verlaufen. Die Anschlussfahne 18 ragt aus dem Verbindungselement 2b heraus.

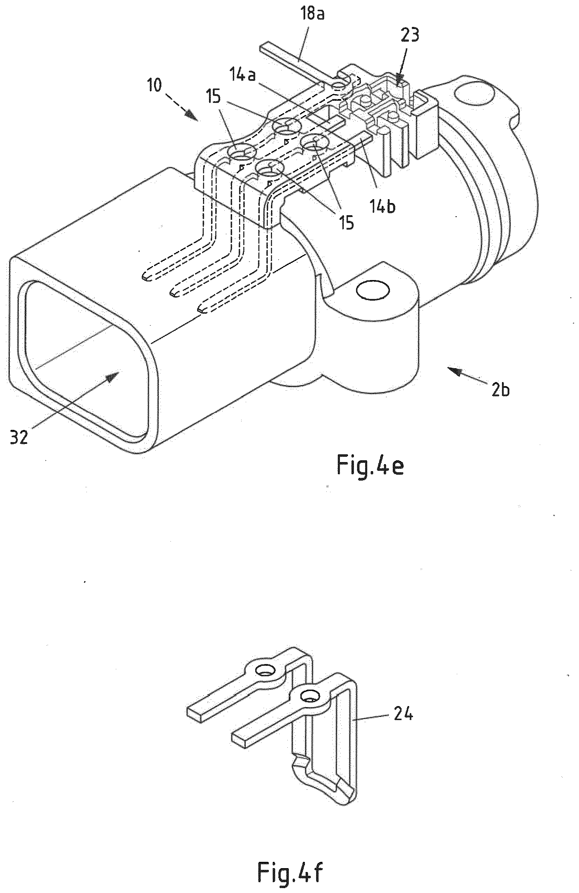

Fig. 4e zeigt das Verbindungselement 2b. Zu erkennen ist, dass die leitenden Verbindungen zwischen den Stegen 14a, b, 18 elektrisch isoliert voneinander sind. Dies kann dadurch erfolgen, dass durch Öffnungen 15 mittels Bohren, Fräsen oder Laser die Verbindung zwischen den Drähten des Stanzgitters 10 aufgetrennt wird. Die äußere Mantelfläche des Verbindungselements 2b ist im Bereich des im Kanal 4 zugewandten Endes durchbrochen und mit Aufnahmen 23 für die als Drahtbrücke gebildete Verbindungsstelle 24 versehen.

Fig. 4f zeigt die als Drahtbrücke gebildete Verbindungsstelle 24, die ebenfalls als Stanzgitter gebildet sein kann. Ist das Stanzgitter 10 wie in Fig. 6 gezeigt gebildet, kann die Verbindungsstelle 24 einstückig hiermit gebildet sein.

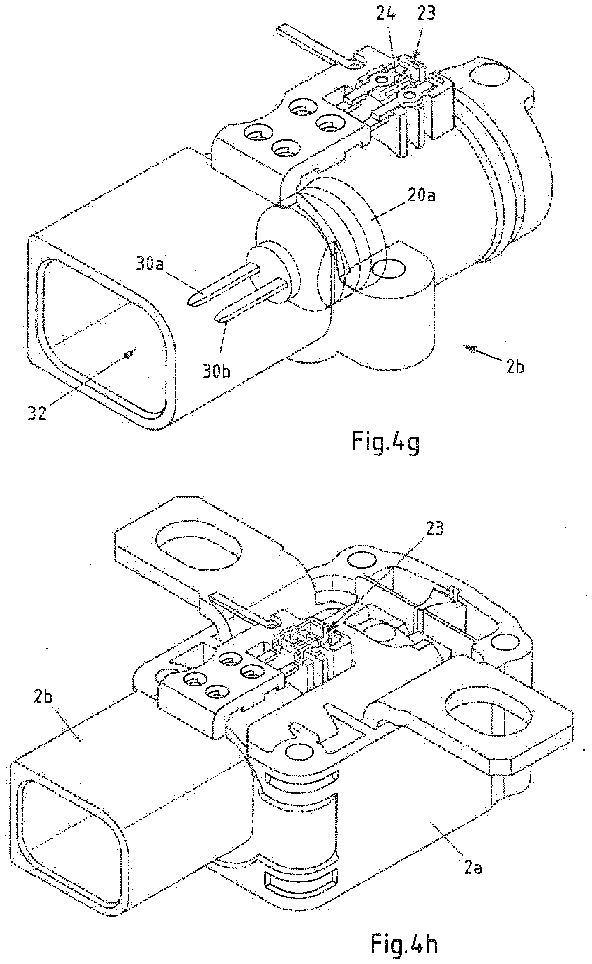

Fig. 4g zeigt das Verbindungselement 2b mit eingesetzter pyrotechnischer Antriebseinheit 20a. Zu erkennen ist, dass die pyrotechnische Antriebseinheit 20a in dem Aufnahmevolumen des Verbindungselements 2b aufgenommen ist und dessen Anschlüsse 30a, b in die buchsenförmige Aufnahme 32 geführt sind. In der Aufnahme 23 kann die Verbindungsstelle 24 eingesetzt oder eingebogen sein, dies kann aber auch in einem späteren Schritt erfolgen.

Fig. 4h zeigt, wie das Verbindungselement 2b in das erste Gehäuseelement 2a eingesetzt ist. Die beiden Gehäuseelemente 2a, b verschließen den Kanal 4.

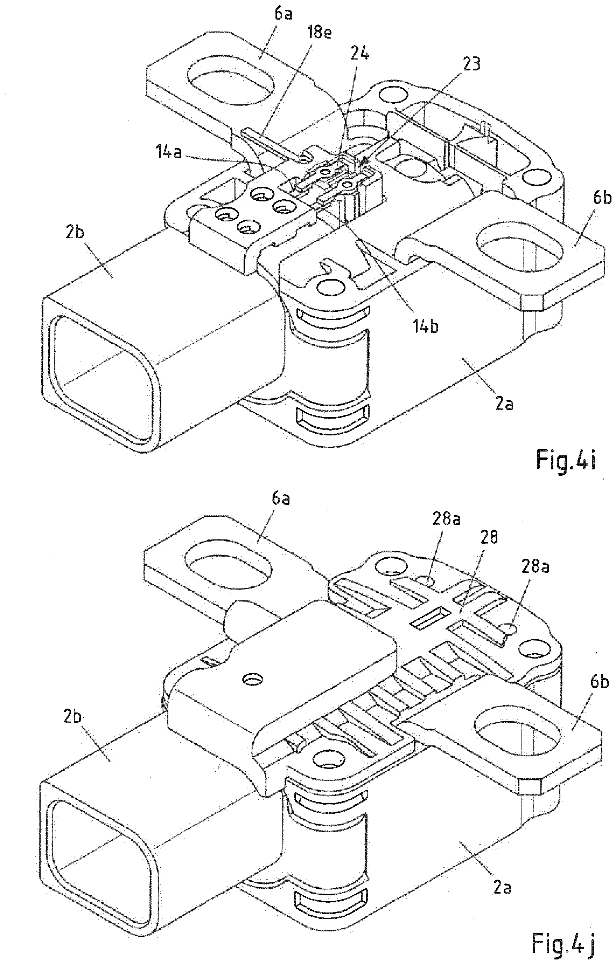

Anschließend kann, wie in der Fig. 4i gezeigt, die Verbindungsstelle 24 bereitgestellt werden, welche in die Aufnahme 23 an dem Verbindungselement 2b eingesteckt oder eingebogen wird. Die Aufnahme 23 kann mit Justierpins versehen, so dass die Drahtbrücke 24 korrekt darin montiert ist und zu den Stegen 14a, b ausgerichtet ist.

Anschließend können die Stege 14a, b mit dem Verbindungselement 24 verlötet oder verschweißt werden. Gleichzeitig oder zeitlich dazu versetzt, kann die Anschlussfahne 18a mit der Anschlusslasche 6a verschweißt oder verlötet werden.

Abschließend wird, wie in Fig. 4j gezeigt, der Deckel 28 auf die Gehäuseelemente 2a, b aufgesetzt, so dass der Kanal 4 vollständig verschlossen wird. Durch Einfüllöffnungen 28a kann in den Kanal 4 ein pastöses, flüssiges oder gasförmiges Medium in den Kanal 4 eingefüllt werden. Diese Einfüllöffnungen können anschließend verschlossen werden und die Trennvorrichtung 2 ist vollständig montiert.

### Bezugszeichenliste

- 2: Trennvorrichtung
- 2a: erstes Gehäuseelement
- 2b: Verbindungselement
- 4: Kanal
- 6a, b: Anschlusslaschen
- 8: Dichtelement
- 10: Stanzgitter
- 12a, b: Kontaktelemente
- 14a, b: Verbindungsstege
- 15: Öffnung
- 16: Batteriekontakt
- 18: Verbindungssteg
- 18a: Anschlussfahne
- 20: Antrieb
- 20a: pyrotechnische Antriebseinheit
- 20b: Bolzen
- 22: Dichtelement
- 23: Aufnahme
- 24: Verbindungsstelle
- 26: Nut
- 28: Deckel
- 30a, b: Anschlüsse
- 32: buchsenförmige Aufnahme
- 34: Mittelwand
- 36: Aufnahmen
- 38: Trennstelle
- 40: Steg
- 44: Aufnahmevolumen

## Patentansprüche

1. Elektrische Trennvorrichtung mit
- einem Gehäuse,
- einer ersten in das Gehäuse eingeführten Anschlusslasche (6a),
- einer zweiten in das Gehäuse eingeführten Anschlusslasche (6b),
- einer in einem geschlossenen Zustand einen Strompfad zwischen der ersten (6a) und der zweiten Anschlusslasche (6b) bildenden, räumlich zwischen den Anschlusslaschen (6a, 6b) liegenden Trennstelle (38),
- wobei die Trennstelle (38) im getrennten Zustand den Strompfad zwischen den Anschlusslaschen (6a, 6b) trennt,
- einem ein Trennen der Trennstelle (38) beeinflussenden Antrieb (20),
- einem in dem Gehäuse gebildeten Kanal zwischen dem Antrieb (20) und der Trennstelle (38), wobei der Antrieb (20) den Kanal auf einer der Trennstelle (38) abgewandten Seite verschließt, und
- einem auf der dem Kanal abgewandten Seite des Antriebs (20) angeordneten Verbindungselement, welches zumindest zwei elektrische Anschlüsse des Antriebs (20) aufnimmt,
- zwei Kontaktelementen eines Schaltpfads, wobei
- die Kontaktelemente über Verbindungsstege jeweils in den Kanal geführt sind und in dem Kanal an einer Verbindungsstelle (24) miteinander kurzgeschlossen sind, derart,
bei einem Auslösen des Antriebs (20) die Verbindungsstelle (24) von den Kontaktelementen weg bewegt wird, so dass die Verbindungsstege mechanisch aufgetrennt sind,
**dadurch gekennzeichnet**
- **dass** das Verbindungselement die zumindest zwei Kontaktelemente aufnimmt und,
- **dass** das Gehäuse mehrteilig ist, wobei zumindest die Anschlusslaschen (6a, 6b) und die Trennstelle (38) in einem ersten Gehäuseteil (2a) angeordnet sind und der Kanal zumindest teilweise durch das erste Gehäuseteil (2a) gebildet ist und das Verbindungselement (2b) ein zweites Gehäuseteil bildet.

2. Elektrische Trennvorrichtung nach Anspruch 1,
**dadurch gekennzeichnet,**
- **dass** das Verbindungselement (2b) einen Batteriekontakt aufnimmt,
- **dass** der Batteriekontakt über einen Verbindungssteg mit einer der Anschlusslaschen (6a, b) kurzgeschlossen ist.

3. Elektrische Trennvorrichtung nach Anspruch 1 oder 2,
**dadurch gekennzeichnet,**
- **dass** das Verbindungselement (2b) ein Steckkontakt, insbesondere ein Stecker oder eine Buchse ist.

4. Elektrische Trennvorrichtung nach einem der vorangehenden Ansprüche, **dadurch gekennzeichnet,**
- **dass** das Verbindungselement (2b) in den Kanal, den Kanal radial abdichtend eingeführt ist.

5. Elektrische Trennvorrichtung nach einem der vorangehenden Ansprüche, **dadurch gekennzeichnet,**
- **dass** das Verbindungselement (2b) eine sich in Längsrichtung erstreckende Durchgangsöffnung aufweist, und
- **dass** in der Durchgangsöffnung, die Durchgangsöffnung radial abdichtend, der Antrieb (20) angeordnet ist.

6. Elektrische Trennvorrichtung nach einem der vorangehenden Ansprüche, **dadurch gekennzeichnet,**
- **dass** in dem Kanal ein fließfähiges Medium, insbesondere ein gelförmiges Medium zwischen dem Antrieb (20) und der Trennstelle (38) angeordnet ist und dass das Medium unmittelbar bei der Trennung der Trennstelle (38) diese umfließt.

7. Elektrische Trennvorrichtung nach einem der vorangehenden Ansprüche, **dadurch gekennzeichnet,**
- **dass** die Anschlüsse, die Kontaktelemente und/oder der Batteriekontakt als Kontaktpins innerhalb des Verbindungselements (2b) angeordnet sind.

8. Elektrische Trennvorrichtung nach einem der vorangehenden Ansprüche, **dadurch gekennzeichnet,**
- **dass** zwischen dem Antrieb (20) und der Trennstelle (38) in dem Kanal ein entlang des Kanals beweglicher Bolzen angeordnet ist und dass die Verbindungsstelle an dem Bolzen formschlüssig angeordnet ist.

9. Elektrische Trennvorrichtung nach Anspruch 8,
**dadurch gekennzeichnet,**
- **dass** der Bolzen einen radialen Rücksprung, insbesondere eine Nut aufweist, und dass die Verbindungsstelle in dem Rücksprung angeordnet ist und dass die Verbindungsstege winklig zu dem Rücksprung, insbesondere in Längsrichtung des Kanals an dem Gehäuse (2a, 2b) angeordnet sind.

10. Elektrische Trennvorrichtung nach einem der vorangehenden Ansprüche,
**dadurch gekennzeichnet,**
- **dass** die Kontaktelemente und die Verbindungsstelle unabhängig voneinander in das Verbindungselement (2b) eingebaut sind, und dass die Kontaktelemente und die Verbindungsstelle nach ihrem Einbau in das Verbindungselement (2b) miteinander verbunden sind.

11. Elektrische Trennvorrichtung nach einem der vorangehenden Ansprüche,
**dadurch gekennzeichnet,**
- **dass** der Antrieb (20) eine pyrotechnische Zündpille ist.

12. System mit einer Trennvorrichtung nach Anspruch 1 und zumindest zwei Kraftfahrzeugbatteriekabeln, bei dem ein erstes Batteriekabel mit der ersten Anschlusslasche verbunden ist und ein zweites Batteriekabel mit der zweiten Anschlusslasche verbunden ist.

13. Verfahren zur Herstellung einer Trennvorrichtung bei dem
- in ein Gehäuse (2a, 2b) eine erste (6a) und eine zweite Anschlusslasche (6b) eingeführt wird,
- wobei räumlich zwischen den Anschlusslaschen (6a, b) eine Trennstelle (38) liegt und die Anschlusslaschen (6a, b) in einem geschlossenen Zustand einen Strompfad bilden,
- Einsetzen eines ein Trennen der Trennstelle (38) bewirkenden Antriebs (20) in das Gehäuse (2a, b), so dass
- durch den Antrieb (20) ein in dem Gehäuse (2a, b) gebildeter Kanal zwischen dem Antrieb (20) und der Trennstelle (38) auf einer der Trennstelle abgewandten Seite verschlossen wird, und
- Anschlüsse des Antriebs (20) in einem auf der dem Kanal abgewandten Seite angeordneten Verbindungselement (2b) angeordnet werden, wobei zumindest zwei Kontaktelemente eines Schaltpfads angeordnet werden, und
- dass die Kontaktelemente über Verbindungsstege jeweils in den Kanal geführt werden und in dem Kanal an einer Verbindungsstelle (24) miteinander kurzgeschlossen werden, und die Verbindungsstelle (24) so an dem Antrieb (20) angeordnet wird, dass bei einem Auslösen des Antriebs (20) die Verbindungsstelle (24) von den Kontaktelementen weg bewegt wird, so dass die Verbindungsstege mechanisch aufgetrennt werden,
**dadurch gekennzeichnet,**
- **dass** das Verbindungselement die zumindest zwei Kontaktelemente aufnimmt und,
- **dass** das Gehäuse (2a, b) mehrteilig ist, wobei zumindest die Anschlusslaschen (6a, 6b) und die Trennstelle (38) in einem ersten Gehäuseteil (2a) angeordnet werden und der Kanal zumindest teilweise durch das erste Gehäuseteil (2a) gebildet ist und das Verbindungselement (2b) als zweites Gehäuseteil bereitgestellt wird.

14. Verfahren nach Anspruch 13 bei dem die Kontaktelemente und/oder der Batteriekontakt aus einem gemeinsamen Stanzgitter (10) bereitgestellt werden, wobei das Stanzgitter (10) bei seinem Einbau in das Verbindungselement (2b) zumindest teilweise aufgetrennt wird.

## Claims

1. Electrical disconnecting device with
- a housing,
- a first terminal lug (6a) inserted into the housing, and
- a second terminal lug (6b) inserted into the housing,
- a separation point (38) forming a current path between the first (6a) and second terminal lugs (6b) in a closed state and located spatially between the terminal lugs (6a, 6b),
- wherein the separation point (38) separates the current path between the terminal lugs (6a, 6b) in a separated state,
- an actuator (20) influencing a disconnection of the separation point (38),
- a channel formed in the housing between the actuator (20) and the separation point (38), the actuator (20) closing the channel on a side facing away from the separation point (38), and
- a connecting element arranged on the side of the actuator (20) facing away from the channel, which accommodates at least two electrical connections of the actuator (20),
- two contact elements of a switching path, wherein
- the contact elements are each guided into the channel via connecting webs and are short-circuited to one another in the channel at a connecting point (24), in such a way that when the actuator (20) is triggered, the connecting point (24) is moved away from the contact elements, so that the connecting webs are mechanically disconnected,
**characterized in**
- **that** the connecting element receives the at least two contact elements and,
- the housing is multipart, at least the terminal lugs (6a, 6b) and the separation point (38) being arranged in a first housing part (2a) and the channel being formed at least partially by the first housing part (2a) and the connecting element (24) forming a second housing part (2b).

2. Electrical disconnecting device according to claim 1,
**characterized in that**
- the connecting element (2b) accommodates a battery contact,
- the battery contact is short-circuited to one of the terminal lugs (6a, b) via a connecting web.

3. Electrical disconnecting device according to claim 1 or 2,
**characterized in that**
- the connecting element (2b) is a plug contact, in particular a plug or a socket.

4. Electrical disconnecting device according to any one of the preceding claims, **characterized in that**
- the connecting element (2b) is inserted into the channel, radially sealing the channel.

5. Electrical disconnecting device according to any one of the preceding claims, **characterized in that**
- the connecting element (2b) has a through-opening extending in the longitudinal direction, and
- the actuator (20) is arranged in the through-opening, radially sealing the through-opening.

6. Electrical disconnecting device according to any one of the preceding claims, **characterized in that**
- a flowable medium, in particular a gel-like medium, is arranged in the channel between the actuator (20) and the separation point (38), and **in that** the medium flows around the separation point (38) immediately upon separation of the latter.

7. Electrical disconnecting device according to one of the preceding claims, **characterized in that**
- the terminals, the contact elements and/or the battery contact are arranged as contact pins within the connecting element (2b).

8. Electrical disconnecting device according to any one of the preceding claims, **characterized in that**
- a bolt movable along the channel is arranged between the actuator (20) and the separation point (38) in the channel, and **in that** the connecting point is arranged on the bolt in a form-fitting manner.

9. Electrical disconnecting device according to claim 8,
**characterized in that**
- the bolt has a radial recess, in particular a groove, and **in that** the connecting point is arranged in the recess, and **in that** the connecting webs are arranged at an angle to the recess, in particular in the longitudinal direction of the channel on the housing (2a, 2b).

10. Electrical disconnecting device according to one of the preceding claims, **characterized in that**
- the contact elements and the connecting point are installed in the connecting element (2b) independently of one another, and **in that** the contact elements and the connecting point are connected to one another after being installed in the connecting element (2b).

11. Electrical disconnecting device according to any one of the preceding claims, **characterized in that**
- the actuator (20) is a pyrotechnic ignition pellet.

12. System comprising a disconnecting device according to claim 1 and at least two automotive battery cables, wherein a first battery cable is connected to the terminal lug and a second battery cable is connected to the second terminal lug.

13. Method of manufacturing a disconnecting device in which
- a first terminal lug (6a) and a second terminal lug (6b) are inserted into a housing (2a, 2b),
- wherein a separation point (38) is spatially located between the terminal lugs (6a, b) and the terminal lugs (6a, b) form a current path in a closed state,
- inserting an actuator (20) causing a separation of the separation point (38) into the housing (2a, 2b), such that
- the actuator (20) closes a channel formed in the housing (2a, 2b) between the actuator (20) and the separation point (38) on a side facing away from the separation point, and
- connections of the actuator (20) are arranged in a connecting element (2b) arranged on the side facing away from the channel, wherein
- at least two contact elements of a switching path are arranged, and
- the contact elements are each guided into the channel via connecting webs and are short-circuited to one another in the channel at a connecting point (24), and the connecting point (24) is arranged on the actuator (20) such that, when the actuator (20) is triggered, the connecting point (24) is moved away from the contact elements, so that the connecting webs are mechanically disconnected **characterized in**
- **that** the connecting element receives the at least two contact elements and,
- **that** the housing (2a, 2b) is multipart, at least the terminal lugs (6a, 6b) and the separation point (38) are arranged in a first housing part (2a) and the channel is formed at least partially by the first housing part (2a) and the connecting element (24) is provided as second housing part (2b).

14. Method according to claim 13, wherein the contact elements and/or the battery contact are formed from a common stamped grid (10), the stamped grid (10) being at least partially separated after its installation in the connecting element (2b).

## Revendications

1. Dispositif de coupure électrique comprenant
- un boîtier,
- une première pièce de connexion (6a) insérée dans le boîtier,
- une deuxième pièce de connexion (6b) insérée dans le boîtier,
- un point de séparation (38) formant un chemin de courant dans un état fermé entre la première (6a) et la deuxième pièce de raccordement (6b), étant spatialement positionné entre les pièces de raccordement (6a, 6b), ,
- où le point de séparation (38) sépare, dans l'état séparé, le chemin de courant entre les pièces de connexion (6a, 6b),
- un entraînement (20) influençant une séparation du point de séparation (38),
- un canal formé dans le boîtier entre l'entraînement (20) et le point de séparation (38), où l'entraînement (20) ferme le canal sur un côté opposé du point de séparation (38), et
- un élément de connexion disposé sur le côté de l'entraînement (20) opposé au canal, qui accueillit au moins deux connexions électriques de l'entraînement (20),
- deux éléments de contact d'un chemin de commutation, où
- les éléments de contact sont respectivement guidés dans le canal par l'intermédiaire de barrettes de connexion et sont court-circuités entre eux dans le canal en un point de connexion (24), de telle sorte que,
lors d'un déclenchement de l'entraînement (20), le point de connexion (24) est éloigné des éléments de contact, de sorte que les barrettes de connexion sont mécaniquement séparées
**caractérisé en ce**
- **que** l'élément de connexion accueille les au moins deux éléments de contact et,
- **que** le boîtier est en plusieurs parties, où au moins les pièces de raccordement (6a, 6b) et le point de séparation (38) sont disposés dans une première partie de boîtier (2a) et le canal est formé au moins partiellement par la première partie de boîtier (2a) et l'élément de connexion (2b) forme une deuxième partie de boîtier.

2. Dispositif de coupure électrique selon la revendication 1,
**caractérisé en ce**
- **que** l'élément de connexion (2b) accueille un contact de batterie,
- **que** le contact de batterie est court-circuitée par une barrette de connexion à l'une des pièces de connexion (6a, b) .

3. Dispositif de coupure électrique selon la revendication 1 ou 2,
**caractérisé en ce**
- **que** l'élément de connexion (2b) est un contact enfichable, en particulier une fiche ou une prise femelle.

4. Dispositif de coupure électrique selon l'une des revendications précédentes, **caractérisé en ce**
- **que** l'élément de connexion (2b) est introduit dans le canal, de manière radialement étanche.

5. Dispositif de coupure électrique selon l'une des revendications précédentes, **caractérisé en ce**
- **que** l'élément de connexion (2b) a une ouverture de passage s'étendant en direction longitudinale, et
- **que** l'entraînement (20) est disposé dans l'ouverture de passage de manière radialement étanche.

6. Dispositif de coupure électrique selon l'une des revendications précédentes, **caractérisé en ce**
- **que**, dans le canal, un milieu fluide, en particulier un milieu gélifié est disposé entre l'entraînement (20) et le point de séparation (38) et que le fluide s'écoule immédiatement autour du point de séparation (38) lors de la séparation du point de séparation.

7. Dispositif de coupure électrique selon l'une des revendications précédentes, **caractérisé en ce**
- **que** les bornes, les éléments de contact et/ou le contact de la batterie sont arrangés sous forme de broches de contact à l'intérieur de l'élément de connexion (2b).

8. Dispositif de coupure électrique selon l'une des revendications précédentes, **caractérisé en ce**
- **qu'**entre l'entraînement (20) et le point de séparation (38) dans le canal, un boulon mobile le long du canal est arrangé et que le point de connexion est disposé sur le boulon par complémentarité de forme.

9. Dispositif de coupure électrique selon la revendication 8,
**caractérisé en ce**
- **que** le boulon a un retrait radial, en particulier une rainure, et que le point de connexion est disposé dans le retrait et que les barrettes de connexion sont disposées sur le boîtier (2a, 2b) formant un angle par rapport au retrait, en particulier dans la direction longitudinale du canal.

10. Dispositif de coupure électrique selon l'une des revendications précédentes, **caractérisé en ce**
- **que** les éléments de contact et le point de connexion sont montés indépendamment les uns des autres dans l'élément de connexion (2b), et que les éléments de contact et le point de connexion sont reliés entre eux après leur montage dans l'élément de connexion (2b).

11. Dispositif de coupure électrique selon l'une des revendications précédentes, **caractérisé en ce**
- **que** le dispositif d'entraînement (20) est une pastille d'amorçage pyrotechnique.

12. Système comprenant un dispositif de coupure selon la revendication 1 et au moins deux câbles de batterie de véhicule automobile, dans lequel un premier câble de batterie est connecté à la première pièce de connexion et un deuxième câble de batterie est connecté à la deuxième pièce de connexion.

13. Procédé de fabrication d'un dispositif de coupure dans lequel
- une première (6a) et une deuxième (6b) pièce de connexion est introduite dans un boîtier (2a, 2b),
- où un point de séparation (38) est situé dans l'espace entre les pièces de connexion (6a, b) et les pièces de connexion (6a, b) forment un chemin de courant dans un état fermé,
- insérer un entraînement (20) provoquant une séparation du point de séparation dans le boîtier (2a, b), de sorte que
- un canal formé dans le boîtier (2a, b) entre l'entraînement (20) et le point de séparation (38) est fermé sur un côté opposé au point de séparation par l'entraînement (20), et
- des raccordements de l'entraînement (20) sont arrangés dans un élément de connexion situé sur le côté opposé au canal. où
- au moins deux éléments de contact d'un circuit de commutation sont disposés et
- que les éléments de contact sont respectivement guidés dans le canal par des barrettes de connexion et sont reliés entre eux dans le canal en un point de connexion (24) et le point de connexion (24) est disposé sur l'entraînement (20) de telle sorte que, lors d'un déclenchement de l'entraînement (20), le point de connexion (24) est éloigné des éléments de contact, de sorte que les barrettes de connexion sont séparées mécaniquement,
**caractérisé en ce**
- **que** l'élément de connexion accueille les au moins deux éléments de contact et,
- **que** le boîtier (2a, b) est en plusieurs parties, au moins les pièces de connexion (6a, 6b) et le point de séparation (38) sont disposés dans une première partie de boîtier (2a) et le canal est formé au moins partiellement par la première partie de boîtier (2a) et l'élément de connexion (2b) est fourni comme deuxième partie de boîtier (2c).

14. Procédé selon la revendication 13, dans lequel les éléments de contact et/ou le contact de batterie sont fournis en une seule pièce contact de la batterie à partir d'une grille de découpage commune (10), où la grille de découpage (10) est au moins partiellement découpée lors de son montage dans l'élément de connexion (2b).
